# EUROPÄISCHE PATENTANMELDUNG

(11) **EP 1 036 511 A2**
(43) Veröffentlichungstag der Anmeldung: **20.09.2000**
(21) Anmeldenummer: 00105485.7
(22) Anmeldetag: 15.03.2000
(51) Int. Cl.: A23L 3/3508, A23B 5/14

(54) **Verfahren zur Haltbarmachung und Mittel zu dessen Durchführung**

(30) Priorität: 15.03.1999 DE 29904725 U; 01.04.1999 DE 19915028
(71) Anmelder: Arconia GmbH, 7002 Chur (CH)
(72) Erfinder: Kern, Ralf M., Dipl.-Ing., 82057 Icking bei München (DE)
(74) Vertreter: Kern, Ralf M., Dipl.-Ing.

(57) **Zusammenfassung**

Es handelt sich um ein Verfahren zur Haltbarmachung von Lebensmitteln, Futtermitteln und anderen biologischen Erzeugnissen, insbesondere auch zur Erzeugung von haltbaren, keimfreien Geflügeleiern, wobei die Lebensmittel u.s.w. einem wässrig-flüssigen, völlig untoxischen und lebensmittel-rechtlich unbedenklichen Entkeimungsmittel geringer Wirkstoffkonzentration ausgesetzt werden, z.B. durch Eintauchen in die Flüssigkeit oder Einsprühen oder durch Anfeuchten der Luft mit dem Mittel als Luftfeuchtigkeitsbestandteil, und um ein Mittel zur Durchführung des Verfahrens, welches eine oder mehrere Lebensmittel, Konservierungsstoffe sowie mindestens eine nicht-toxische, insbesondere organische Säure aufweist.

## Beschreibung

Die Erfindung betrifft ein Verfahren zur Haltbarmachung von Lebensmitteln, Futtermitteln, Saatgut und anderen biologischen Erzeugnissen, insbesondere auch zur Erzeugung von haltbaren, keimfreien Geflügeleiern, und ein Mittel zum Haltbarmachen von Lebensmitteln usw.

Bei der Lager- bzw. Vorratshaltung von verderblichen Materialien treten z.T. Pilz., z.B. Schimmelpilzbefall, Bakterien- und andere Ungeziefer-Schäden auf

Selbst bei temperatur- und feuchtigkeitsmäßig sorgfältiger Lagerung von z.B. landwirtschaftlichen Produkten, wie z.B. Getreide bzw. Getreideprodukten wie Mehl, Kartoffeln, Rüben, sowie Gemüse und Obst auch als Trockenprodukte ist ein Schimmel- oder Bakterienbefall mit entsprechenden Verlusten und Qualitätsminderungen nicht zu vermeiden, die bei weniger günstigen Bedingungen entsprechend höher sind.

Derartiger Schädlingsbefall, insbesondere durch Mikroorganismen, kann zudem auch in kleinsten Mengen erheblich gesundheitschädlich sein. Er geht bei der Getreidebevorratung sogar soweit, dass die von dem Schädlingsbefall verursachte Staubbildung durch Oberflächenangriff bzw. feinste Zerkleinerung der Vorräte und der Stoffwechselprodukte von Bakterien nicht nur sehr toxisch sind, sondern sogar eine Staubexplosionsgefährdung ergibt.

Darüberhinaus haben Kleinstlebewesen die Eigenschaft, ohnehin schon durch Abrieb oder dergleichen sich ergebende Staubpartikel noch auf bis u 1/1000 der Staubkorngröße zu zerkleinern. Entsprechendes gilt natürlich für von den den Kleinst- und Kleinlebewesen von größeren Körnern oder dergleichen abgetrennte Staubteile, so dass die damit entstehenden Staubanteile zusammen mit den dabei entstehenden Stoffwechselprodukten der Klein- und Kleinstlebewesen (z.B. Staub) eine zusätzlich explosionsgefährdende Dimension bekommen.

Hinzu kommen Schädigungen und eingeschleppte Verkeimungen und toxische Ausscheidungen durch Kleinlebewesen verschiedenster Art - auch durch z.B. Mäuse z.B. (Leptospirose bei z.B. Pferden).

Vor allem aber ergibt sich, dass die Pilze, Bakterien, Viren und Kleinstlebewesen im Schutze der bzw. mit den Vorräten zusammen überwintern und sich dabei auch in den Lagerräumen bzw. deren Wänden festsetzen.

Bei der Feuchtbevorratung wie z.B. Silage bilden sich trotz der konservierenden Bedingungen unerwünschte und gesundheitsgefährliche Keime sowie abschreckende Geruchsgase.

Selbst bei der geschützten Lagerung von Holz ist eine keimfreie Trockenlagerung nicht zu gewährleisten.

Bei langer Einwirkung des Entkeimungsmittels auf die Lebensmittel usw. ist es möglich, dass das Entkeimungsmittel in die Lebensmittel usw. eindiffundiert. Dies ist ein gewünschter Effekt, welcher zusätzlich zur Haltbarmachung von der Lebensmittel usw. beiträgt und ohne jede gesundheitschädliche Komponente ist.

Es ist bekannt, dass Hühnereier häufig mit gefährlichen Keimen, wie insbesondere Salmonellen-Bakterien verseucht sind und daher eine erhebliche Gefährdung beim Verbrauch darstellen Ebenso entstehen bei der Geflügelaufzucht generell Verluste durch wegen Verkeimung abgestorbener Eier. Die Bakterien bzw. Salmonellen-Bakterien stammen sowohl aus dem Stall, als auch aus dem Gefieder der Hühner.

Hühnereischalen sind porös und zwar mit der Größenordnung 7000 bis 1700 Poren, so dass ein Austausch zwischen der Außenumgebung und der Luftkammer des Eis ermöglicht wird, wobei ein Austausch Flüssigkeit aus dem Ei gegen Außenluft ermöglicht wird. Diese Austausch ist sowohl von der gegebenen Luftfeuchtigkeit, als auch der Umgebungstemperatur abhängig, so dass sich bei ungekühlten Eiern an deren stumpfem Ende z.B. innerhalb von 25 Tagen eine Luftkammer zwischen der an der Eischale haftenden äußeren Schalenmembran und der inneren Eimembran von ca. 6 mm Höhe ausbildet, und zwar begünstigt durch die Schrumpfung des Ei-Inneren aufgrund der Abkühlung nach dem Verlassen des Vogelkörpers unter Abgabe von Feuchtigkeit aus dem Ei-Inneren durch die poröse Eischale. Bei gerade gelegtem Ei ist die Luftblase zunächst nur als kleine Scheibe erkennbar.

Vorzugsweise in diese Phase können Keime, insbesondere Salmonellenkeime in das Ei gelangen, unterstützt durch das 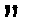 Einatmen" von Luft durch die poröse Eischale und Schalenmembran. Wenn dabei auch nur ein oder ganz wenige Salmonellenkeime in das Ei-Innere gelangen, führt dies bei Unterbrechung der oder ohne Kühlung unter 8° C zur gefährlichen Verstärkung der Eiverkeimung mit den Salmonellen.

Aufgabe der Erfindung ist es, ein gattungsgemäßes Verfahren sowie ein gattungsgemäßes Mittel zur Haltbarmachung von Lebensmitteln, Futtermitteln, Saatgut und anderen biologischen Erzeugnissen, insbesondere auch zur Erzeugung von halb baren, keimfreien Geflügeleiern, bereitzustellen, welches Schimmelpilzbefall und andere mikrobiologische Einwirkungen, die zum Verderben der Lebensmittel usw. beitragen, zu verhindern.

Diese Aufgabe wird für das Verfahren dadurch gelöst, dass die Lebensmittel usw. einem wässrig-flüssigem, völlig untoxischem und lebensmittel-rechtlich unbedenklichem Entkeimungsmittel geringer Wirkstoffkonzentration ausgesetzt werden, z. B. durch Eintauchen in die Flüssigkeit oder Einsprühen oder durch Anfeuchten der Luft mit dem Mittel als Luftfeuchtigkeitsbestandteil. Für das Mittel wird die Aufgabe dadurch gelöst, dass es eines oder mehrere Lebensmittel, Konservierungsstoffe sowie mindestens eine nicht-toxische, insbesondere organische Säure aufweist.

Insbesondere kann der Kontakt des Eis mit dem Mittel kurz nach der Eiablage noch am warmen Ei vorzugsweise noch bei körperwarmer Temperatur erfolgen, so dass eine Aufnahme des hochverdünnten Entkeimungsmittels durch das "Einatmen" von Luft durch die Eimembran unterstützt wird.

Da der Diffusionsprozess durch die poröse Eischale mehr oder weniger während der gesamten Lagerzeit anhält, sollte das Ei auch anschließend dem Einfluss des Entkeimungsmittels ausgesetzt sein, entweder durch gegebenenfalls intermittierendes Feuchthalten mit dem wässrigen Entkeimungsmittel oder eine Anreicherung der Luftfeuchtigkeit während der Lagerhaltung oder auch in angetrocknetem Zustand mit dem Entkeimungsmittel. Dies gilt auch für die Lagerung von Lebensmitteln u.s.w.

Voraussetzung für die Anwendbarkeit des Verfahrens ist, dass das angewendete Entkeimungsmittel völlig untoxisch und lebensmittelrechtlich unbedenklich sowie vollständig biologisch abbaubar, d.h. umweltschonend ist.

Uberraschenderweise ist ein solches Mittel erfindungsgemäß in bei niedriger Konzentration synergistisch wirksamer Form einer Kombination aus einem oder mehreren Lebensmittel-Konservierungsstoffen mit mindestens einer nicht-toxischen, insbesondere organischen Säure gegeben, wobei in vergleichsweise geringer Konzentration in Wasser mit Trinkwasserklasse 0 eine stark entkeimende bzw. keimreduzierende Wirkung eintritt.

Konkreterweise kann das Mittel aus rein biologischen Bestandteilen, nämlich einer Kombination einer oder mehrerer Verbindungen aus der Gruppe der Verbindungen Citronensäure, Sorbinsäure, L-Ascorbinsäure und/oder Acetylsalicylsäure oder deren Derivate bestehen
mit mindestens einem Lebensmittel-Konservierungsstoff wie beispielsweise Benzoesäure und deren Derivate wie
Sorbinsäure, Citronensäure, Weinsäure, Milchsäure, Apfelsäure, Essigsäure, Bernsteinsäure, Acetylsalicyl- und L-Ascorbinsäure sowie
Natriumbenzoat, p-Hydroxybenzoesäure, Ameisensäure, Propionsäure und Abkömmlinge sowie Salze, Ester und/oder Mischungen derselben.

Zur Verstärkung der Initialwirkung des Mittels kann dieses ein Oxidationsmittel gemäß Anspruch 6 aufweisen.

Die einzelnen biologischen Bestandteile der erfindungsgemäßen Mittelkombination nach einem der Ansprüche 5, 6 und 7 bei eventueller Zugabe des Oxidationsmittels nach Anspruch 8 und mit einem pH-Wert gemäß Anspruch 12 in einer Verdünnung in wässriger Lösung von 15 - 0,03 g Mittel, bevorzugt 10 - 0,1 g, insbesondere 8 - 0,1 g Mittel pro Liter Wasser oder auch in weit geringerer Kombination entkeimungswirksam angewandt werden, wobei das Mittel in wässriger Lösung einen sauren pH-Wert zwischen 2 und 7 aufweist.

Im Detail kann das Mittel eine optimierte Zusammensetzung gemäß den Ansprüchen 9 und 11 aufweisen.

Da das Mittel seine Entkeimungswirkung eine Zeit lang behält bzw. sich erst nach einiger Zeit voll verbraucht, ist eine zeitlich ausgedehnte Wirksamkeit gegeben, d.h. vorbeugend gegen später eingetragene Verkeimung.

Um eine ausreichende Benetzung der Eischale bzw. eine verringerte Oberflächenspannung des Mittels zu gewährleisten, kann bzw. können ihm ein oder mehrere Tenside nach Anspruch 13 zugegeben werden, das biologisch voll abbaubar ist. Damit wird auch eine bessere Benetzung der Stallanlagen insbesondere in den bakterienträchtigen Ritzen möglich.

Ganz generell ist der Schutzumfang des Mittels in seiner organischen Verbindungszusammensetzung nach Anspruch 14 gegeben.

Bevorzugt kann das Mittel auch zur keimfrei-Haltung der ganzen Umgebung der Eierzeugung verwendet werden, d.h. für den Boden, das Gefieder der Tiere, den Stall und die Eiablagestelle, sowie die Verpackung und auch die Luftgestaltung der Kühlräume, sowie auch des Gefieders der Vögel wie Hühner, Puten, Tauben, Ziervögel, etc.

Dafür kann auch durch die Zugabe eines Silbersalzes nach Anspruch 15 eine auf längere Zeit aktiv wirksame Entkeimung bzw. Keimreduzierung erreicht werden.

Um das Lösungsverhalten weiter günstig zu beeinflussen, kann es sinnvoll sein, MgCl₂ einzusetzen, das durch lonenaustausch mit anderen zweiwertigen Salzen die Lösung der Ablagerungen zweiwertiger Ionen fördert.

Dadurch, dass nun Citronensäure mit ihren günstigen Lösungseigenschaften gemeinsam mit Silberverbindungen, wie -salzen, die gegen ein Wachstum von Keimen eingesetzt werden, kann bei einer überraschend guten unabhängigen Entkeimungswirkung auch die Nachverkeimung herabgesetzt werden.

Zur Schonung eisenhaltiger Stallteile kann einerseits noch ein Korrosionsschutzmitter nach Anspruch 16 und/oder ein Oberflächenschutzmittel gemäß Anspruch 17 vorgesehen sein.

Das Mittel ist nicht nur 100 %tig biologisch abbaubar, sondern auch vor allem stark bis vollständig gegen Geruchsbildung wirksam sowie haut- und sogar schleimhautschonend bzw. -verträglich und erlaubt auch keine Schwächung durch Resistenzerscheinungen.

Das Mittel wirkt gegen Keime wie Bakterien (bakterizid), Pilze wie Schimmelpilze (fungizid), Flechten, Algen, Pilzsporen und Blütenstaub bzw. Blütenpollen und Sporen, Hefen, Protozoen, Eukaryoten, Eiweißmoleküle (BSE-Prionen), Enzyme, Makrophagen und auch molekular-biologische Schädlinge oder dergleichen, Parasiten durch Zerstörung deren Nachwuchs und Eier, sowie Biofouling und Epelithionbildung. Auch eine ungewollte Genübertragung bzw. Genverbreitung (Konjugation) auf originäre Stämme lässt sich damit unterbinden.

Konkret ist das erfindungsgemäße Mittel auch gegen sämtliche Arten von Aspergillus, Legionellen und Salmonellen, sowie
Escherichia coli,
Klebsielle pneumoniae,
Staphylococcus aureus,
Pseudomonas aeruginosa,
Streptococcus faecalis,
Proteus mirabilis,
Mycobacterium tuberculosis,
Clostridium sporogens,
Candida albicans
mit bis zu völliger Entkeimung erprobt.

## Patentansprüche

1. Verfahren zur Haltbarmachung von Lebensmitteln, Futtermitteln, Saatgut und anderen biologischen Erzeugnissen, insbesondere auch zur Erzeugung von haltbaren, keimfreien Geflügeleiern, dadurch gekennzeichnet, dass die Lebensmittel u.s.w. einem wässrig-flüssigen, völlig untoxischen und lebensmittel-rechtlich unbedenklichen Entkeimungsmittel geringer Wirkstoffkonzentration ausgesetzt werden, z.B. durch Eintauchen in die Flüssigkeit oder Einsprühen oder durch Anfeuchten der Luft mittels dem Mittel als Luftfeuchtigkeitsbestandteil.

2. Verfahren nach Anspruch 1, insbesondere zur Erzeugung von keimfreien Geflügeleiern, dadurch gekennzeichnet, dass der Kontakt des Ei mit dem Mittel kurz nach der Eiablage noch am warmen Ei, bevorzugt noch bei körperwarmer Temperatur erfolgt.

3. Verfahren nach Anspruch 1 oder 2, dadurch gekennzeichnet, dass die Lebensmittel u.s.w. während der Lagerung dem Einfluss des Entkeimungsmittel ausgesetzt sind, entweder durch intermittierendes Feuchthalten mit dem Mittel oder durch Anreicherung der Luftfeuchtigkeit bei der Lagerhaltung mit dem Mittel.

4. Mittel zum Haltbarmachen von Lebensmitteln u.s.w. zur Durchführung des Verfahrens nach einem der Ansprüche 1 - 3, mit einem oder mehreren Lebensmittel-Konservierungsstoffen sowie mindestens einer nicht-toxischen, insbesonderen organischen Säure.

5. Mittel nach Anspruch 4, welches mindestens eine Kombination einer oder mehrerer Verbindungen aus der Gruppe der Verbindungen Citronensäure, Sorbinsäure, L-Ascorbinsäure und/oder Acetylsalicylsäure oder deren Derivate aufweist
mit mindestens einem Lebensmittel-Konservierungsstoff wie beispielsweise Benzoesäure und deren Derivate wie
Sorbinsäure, Citronensäure, Weinsäure, Milchsäure, Apfelsäure, Essigsäure, Bernsteinsäure, Acetysalicyl- und L-Ascorbinsäure sowie
Natriumbenzoat, p-Hydroxybenzoesäure, Ameisensäure, Propionsäure und Abkömmlinge sowie Salze, Ester und/oder Mischungen derselben.

6. Mitteln nach Anspruch 4, dadurch gekennzeichnet, dass es einen Anteil eines Oxidatinsmittls wie eine Perverbindung aus z.B. einem Peroxid, wie Natrium-, Kalium-, Calcium- oder Wasserstoffperoxid oder einen Abkömmling einer Persäure wie Perborat, Perphosphat, Percarbonat oder eine stark oxidierende Verbindung wie ein Permanganat aufweist.

7. Mittel nach einem der Ansprüche 4 - 6, dadurch gekennzeichnet, dass die Kombination von 50 bis 80 Gew. % bevorzugt 55 bis 70 Gew.%, insbesondere 60 bis 65 Gew. % Citronensäure, 20 bis 50 Ges.%, bevorzugt 30 bis 45 Gew.%, insbesondere 35 bis 40 Gew.% einer festen Peroxoverbindung, sowie 0,3 bis 1 Gew.% eines Lebensmittelkonservierungsstoffes aufweist, wobei die Summe aller Prozentsätze jeweils 100 ist.

8. Mittel nach Anspruch 7, dadurch gekennzeichnet, dass die Citronensäure bis zu 1 bis 25 Gew.% der Gesamtmenge durch L-Ascorbinsäure und/oder Acetylsalicylsäure ersetzt ist.

9. Mittel nach einem der Ansprüche 4 bis 8 in wässriger Lösung von 15 - 0,03 g Mittel, bevorzugt 10 - 0,1 g, insbesondere 8 - 0,1 g Mittel pro Liter Wasser.

10. Mittel nach einem der Ansprüche 4 - 8, gekennzeichnet durch 0,05 - 10 g, bevorzugt 0,2 -6 g und besonders bevorzugt 0,3 -4 g Natriumbenzoat und 0,1 - 10 g, bevorzugt 0,2 - 5 g und besonders bevorzugt 0,3 - 3 g Sorbinsäure.

11. Mittel nach einem der Ansprüche 4 bis 9 mit zusätzlich 0,0001 - 16, vorzugsweise 12, insbesondere 10 Vol.-% H₂0₂ pro Liter Wasser sowie gegebenenfalls Stabilisatoren für die Peroxidverbindung.

12. Mittel nach einem der vorhergehenden Ansprüche 4 bis 9, dadurch gekennzeichnet, dass die Lösung einen sauren PH-Wert zwischen etwa 2 und 7 aufweist.

13. Mittel, insbesondere nach einem der vorhergehenden Ansprüche, gekennzeichnet durch 0,1 bis 5% eines oder mehrerer Tenside ausgewählt aus der Gruppe bestehend aus in der verwendeten Menge untoxischen anionischen und nichtionischen Tensiden, Seifen, FettsäureAminocarbonsäurekondensate, Alkylsulfonate, Fettsäureestern, sulfatierten Fettsäureglyderiden, Betaine, Sulfobetaine, Saponine, Fettsäureester von Polyalkoholen, Oxyäthlierte Fettsäuren, etc. und insbesondere Natriumdodecylsulfonat und Natriumlaurylsulfat.

14. Mittel nach einem der vorhergehenden Ansprüche, dadurch gekennzeichnet, dass die organischen Säuren gesättigte oder ungesättigte Carbonsäuren mit 1-14 C-Atomen, bevorzugt 1-12 C-Atomen sind.

15. Mittel nach einem der vorhergehenden Ansprüche 4 bis 14, dadurch gekennzeichnet, dass ihm ein wasserlösliches Silbersalz in einem Anteil von vorzugsweise weniger als 0,2 bis 0,5 % der Trockenmasse zugesetzt ist.

16. Mittel nach einem der vorhergehenden Ansprüche, dadurch gekennzeichnet, dass ihm ein Korrosionsschutzmittel vorzugsweise in 0,1 bis 1 Gew.% in der bei der Behandlung verwendeten Konzentration der Lösung zugesetzt ist.

17. Mittel nach einem der vorhergehenden Ansprüche, dadurch gekennzeichnet, dass ihm eine Oberflächenschutzkomponente, z.B. Wachs beigefügt ist.
